# EUROPÄISCHE PATENTSCHRIFT

(11) **EP 1 107 260 B1**
(45) Veröffentlichungstag und Bekanntmachung des Hinweises auf die Patenterteilung: **15.10.2008**
(21) Anmeldenummer: 00204117.6
(22) Anmeldetag: 22.11.2000
(51) Int. Cl.: G21K 1/10, G21K 1/02

(54) **Gitter zur Absorption von Röntgenstrahlen**
X-ray absorbing grid
Grille absorbant les rayons-x

(30) Priorität: 30.11.1999 DE 19957429; 26.05.2000 DE 10026160
(43) Veröffentlichungstag der Anmeldung: 13.06.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Such, Olaf, Dr., Habsburgerallee 11, 52064 Aachen (DE); Lauter, Josef, Dr., Habsburgerallee 11, 52064 Aachen (DE); Schneider, Stefan, Dr., Habsburgerallee 11, 52064 Aachen (DE); Wieczorek, Herfried, Dr., Habsburgerallee 11, 52064 Aachen (DE)
(74) Vertreter: Volmer, Georg

(56) Entgegenhaltungen:
- EP-A- 0 387 103
- DE-A- 3 324 046
- GB-A- 439 728
- IE-A- 64 618
- US-A- 5 468 970
- US-A- 5 771 269
- US-A- 5 799 057
- US-A- 5 814 235

## Beschreibung

Die Erfindung betrifft ein Gitter zur Absorption von Röntgenstrahlen.

Derartige Gitter werden als Streustrahlengitter in der Röntgentechnik eingesetzt, um im Gewebe des Patienten entstehende Streustrahlung zu absorbieren, bevor das durch die unterschiedlichen Schwächungseigenschaften des untersuchten Gewebes entstehende charakteristische Röntgensignal auf den Röntgendetektor trifft.

Die durch Streuung der Röntgenphotonen im Untersuchungsobjekt entstehende, nicht nutzbare Strahlung, wird am Detektor zur Verringerung des Streustrahlenanteils am Gesamtsignal mit Hilfe von Blenden, abgeschirmt, so dass schräg einfallende Streustrahlung absorbiert wird und nicht zum Detektor gelangt. Diese Art von Blenden werden auch als Streustrahlengitter bzw. Streustrahlenlamellen bezeichnet. Die Streustrahlengitter sind für herkömmliche Einliniendetektoren üblicherweise als Blechlamellen ausgeführt.

Die von einem Röntgenstrahler ausgesendete Röntgenstrahlung durchdringt den Patienten und wird der unterschiedlichen Dichte und chemischen Zusammensetzung des zu untersuchenden Gewebes oder der Knochen entsprechend geschwächt. Gleichzeitig wird das Röntgensignal mit Streustrahlung behaftet. Um diese Streustrahlung, die das darzustellende primäre Röntgenbild verfälscht, zu reduzieren, passiert die Röntgenstrahlung ein auf den Fokus der Strahlenquelle fokussiertes Streustrahlengitter. Dadurch erreicht man bei der Detektion der Röntgenquanten, dass jeweils nur die Röntgenquanten detektiert werden, die charakteristisch für die Schwächung des durchstrahlten Objektes sind.

In der US 5099134 wird ein Kollimator (Streustrahlengitter) und ein Verfahren zur Herstellung eines solchen beschrieben. Der Kollimator wird durch einen Röntgenstrahlen absorbierenden Rahmen gebildet, in dem erste und zweite Partitionsplatten angeordnet werden. Die Partitionsplatten weisen jeweils zur Partitionsplatte longitudinale Schlitze auf, die es ermöglichen, die ersten Partitionsplatten in entsprechendem Winkel in die zweiten Partitionsplatten zu stecken. Der rechteckige Rahmen weist an seinen Innenkanten Schlitze auf, die der Aufnahme der jeweiligen Enden der Partitionsplatten dienen.

Der Herstellung derartiger zweidimensionaler Streustrahlengitter sind durch die Komplexität der Partitionsplatten gewisse Grenzen gesetzt. Die Herstellung von Streustrahlengittern mit großen Dimensionen, wie sie beispielsweise für großflächige Detektoren verwendet werden, erweist sich als schwierig, da eine auftretende Durchbiegung der großen Partitionsplatten ein einfaches und korrektes Ineinandergleiten der Schlitze der Partitionsplatten erschwert.

US 5,468,970 A offenbart eine Vorrichtung zum Kollimierten einfallender Röntgenstrahlung, welche aus einer Vierzahl parallel zueinender verlaufender runder Drähte besteht.

Großflächige zweidimensionale Streustrahlengitter werden beispielsweise bei Multi-Line CT-Geräten (Computer-Tomographie) verwendet. CT-Untersuchungsgeräte sind so aufgebaut, dass die Strahlungsquelle dem Detektor gegenüber auf einer Gantry angeordnet ist, die sich um den Patienten dreht, wobei der Patient langsam mit einer Pritsche bewegt wird. Vibrationen der Gantry, die sich auch auf das Streustrahlengitter und den Röntgendetektor übertragen, wirken sich negativ auf die Bildqualität des darzustellenden Bildes aus. Derartige negative Effekte lassen sich nicht nachbilden, so dass eine spätere Reduzierung dieser das Bild verfälschenden Effekte bei der Bildverarbeitung nur eingeschränkt möglich ist. Der Röntgendetektor ist dabei in zwei Dimensionen in seiner Länge ausgedehnt, wobei die Ausdehnung in Richtung der Gantry die Ausdehnung in Richtung der Längsachse des Patienten um ein Vielfaches überschreitet.

Um einen schnellen Röntgenvorgang zu realisieren, erhöht man die Breite des Röntgenstrahles. Dadurch wird mit einem Scan eine größere Oberfläche des Untersuchungsobjektes und demzufolge auch ein größeres Volumen gescannt. Dies hat aber wiederum zur Folge, dass der Streustrahlenanteil zunimmt. Um diesen zunehmenden Streustrahlenanteil zu reduzieren, wird die Höhe des Streustrahlengitters erhöht. Bekannte Streustrahlengitter weisen dafür jedoch nicht die erforderliche Robustheit auf.

Eine weitere Möglichkeit, zweidimensionale Streustrahlengitter mit der erforderlichen Präzision herzustellen, wird durch Entfernen von Material aus einem größeren Materialblock gegeben. Diese Herstellungsprozesse sind jedoch sehr kostenintensiv und für die Produktion großer Stückzahlen nicht geeignet.

Aufgabe der Erfindung ist es deshalb, ein fokussiertes Streustrahlengitter zur Reduzierung der Streustrahlung anzugeben, welches mittels einfacher Herstellung bei entsprechender Robustheit auch für großflächige Streustrahlengitter realisierbar ist.

Die Aufgabe wird durch ein Streustrahlengitter gemäß Anspruch 1 gelöst.

Die Drahtelemente weisen ein vorgebbare Länge auf, die durch die Abmessungen des Röntgendetektors festgelegt wird. Eine entsprechende Anzahl dieser Drahtelemente wird mit einem vorgebbaren Abstand zueinander in einer Schicht oder Lage angeordnet. Der Abstand der Drahtelemente zueinander wird dabei durch die Auflösung des Röntgendetektors festgelegt. Die Drahtelemente sind vorzugsweise parallel zueinander in einer Schicht angeordnet. Mehrere dieser Schichten werden so übereinander angeordnet, dass sich ein gewebeartiges Gitter ergibt. Dazu werden aufeinanderfolgende Schichten in ihrer Ausrichtung um einen rechten Winkel gedreht, so dass bei gleichem Abstand zwischen den Drahtelementen der Schichten ein Quadrat mit einer Kantenlänge gebildet wird, die dem Abstand zwischen den Drahtelementen entspricht. Durch das Anordnen mehrerer derartiger Schichten entsteht eine räumliche Anordnung, die Gitteröffnungen aufweist. In einem räumlichen Koordinatensystem haben die Drahtelemente verschiedener Schichten vorzugsweise eine Ausrichtung in x, y Richtung.

Streustrahlengitter werden vor einem Röntgendetektor angeordnet, um nicht nutzbare Streustrahlen herauszufiltern. Röntgendetektoren weisen mittlerweile zweidimensionale Strukturen auf, die eine höhere Bildqualität und einen schnelleren Röntgenvorgang ermöglichen. Diese Röntgendetektoren setzen sich aus mehreren Detektorelementen zusammen. Die Größe dieser Detektorelemente bestimmt den Abstand der Drahtelemente zueinander in den einzelnen Schichten. Das Streustrahlengitter wird bezüglich seiner Gitteröffnungen so ausgerichtet, dass die von einer Strahlungsquelle ausgesandten Röntgenstrahlen senkrecht auf eine von der obersten Schicht gebildeten Ebene des Streustrahlengitters auftreffen. Die auftreffenden Röntgenstrahlen haben im räumlichen Koordinatensystem eine annähernde Ausrichtung in die z Richtung.

In einer weiteren Ausführungsform erweist es sich als vorteilhaft, den Querschnitt der Drahtelemente rund oder n-eckig auszuführen. Da der Streustrahlenanteil mittels der Drahtelemente absorbiert wird, kann ein spezieller Querschnitt der Drahtelemente bezüglich der Reflexion der Strahlen von Vorteil sein. In Bezug auf die Herstellung eines derartigen Gitters läßt sich je nach Verfahren ein spezieller Querschnitt der Drahtelemente besser verarbeiten.

In einer weiteren Ausführungsform erweist es sich als vorteilhaft, den Abstand zwischen einzelnen Drahtelementen in einer Schicht zu variieren. Röntgendetektoren weisen gegebenenfalls eine unterschiedliche Auflösung aus, so dass beispielsweise im Randbereich des Röntgendetektors und demzufolge auch im Randbereich des Streustrahlengitters eine gröbere Auflösung möglich ist. Dazu müßten die Drahtelemente an den Randbereichen der einzelnen Schichten einen größeren Abstand zueinander aufweisen, als im mittigen Bereich, in dem die Auflösung des Röntgendetektors am größten ist.

Die Strahlungsquelle sendet die Röntgenstrahlen mit einem entsprechenden Fokus aus. Erfindungsgemäß ist das Streustrahlengitter auf diesen Fokus ausgerichtet bzw. zu fokussiert. Dies macht es erforderlich, den Abstand der Drahtelemente in den verschiedenen Schichten zu variieren. Der Abstand der Drahtelemente in den oberen Schichten des Streustrahlengitters muß somit geringer sein, als der Abstand der Drahtelemente in den unteren Lagen oder Schichten des Streustrahlengitters. Oben und unten bezieht sich hierbei auf das Auftreffen der Röntgenstrahlen. Das heißt die Schicht, die der Strahlungsquelle am dichtesten angeordnet ist, weist den geringsten Abstand zwischen den Drahtelementen auf und die Schicht die am weitesten von der Strahlungsquelle entfernt ist oder am dichtesten zum Röntgendetektor angeordnet ist, weist den größten Abstand zwischen den Drahtelementen auf. Die räumliche Form einer derartigen Gitteröffnung bildet einen Kegelstumpf mit quadratischer Grundfläche.

Die Anordnung mehrerer aufeinanderfolgender Schichten mit gleicher Ausrichtung der Drahtelemente hat den Vorteil, dass Streustrahlen für alle Einfallswinkel absorbiert werden. Bei einem gleichmäßig ausgebildeten Streustrahlengitter, bei dem die Ausrichtung der Drahtelemente regelmäßig wechselt, können Streustrahlen mit einem bestimmten Einfallswinkel das Streustrahlengitter durch die zwischen den Drahtelementen der einzelnen Schichten befindlichen Lücken passieren. Bei Vermeidung einer gewissen Regelmäßigkeit bei der Ausrichtung des Streustrahlengitters ist ein zufälliges Passieren von Streustrahlen mit bestimmten Einfallswinkel ausgeschlossen.

In einer weiteren Ausführungsform erweist es sich als vorteilhaft, die Drahtelemente aus einem Röntgenstrahlen absorbierenden Material auszubilden oder die Drahtelemente mit einem Röntgenstrahlen absorbierenden Material zu ummanteln. Metalle sind dabei besonders geeignet, speziell Molybdän oder Wolfram.

Um eine gute Stapelfähigkeit der einzelnen Schichten zu erreichen, bietet es sich an, die Drahtelemente in einen für Röntgenstrahlen durchlässigen Kunststoff einzulassen, so dass jede Schicht ebene Oberflächen aufweist. Die Stärke der Schichten sollte den Durchmesser oder die Querschnittsabmessungen der Drahtelemente jedoch nicht übersteigen. Ebenfalls können die Schichten von Drahtelementen in einen flüssigen, für Röntgenstrahlung durchlässigen Hilfsstoff eingelassen werden, ohne ausgefüllte Schichten auszubilden. Das Gitter wird aus dem Hilfsstoff entfernt, bevor dieser aushärtet. Damit erreicht man ein Verkleben der Drahtelemente. Für ein derartiges Verkleben der Drahtelemente erweist sich ein runder Querschnitt der Drahtelemente als besonders vorteilhaft, da die Auflagefläche zwischen den Drahtelemente besonders klein ist, so dass eine gute Klebeverbindung hergestellt werden kann. Beim Verschweißen oder Verlöten der Drahtelemente kann ein vier- oder mehreckiger Querschnitt vorteilhaft sein, da hier mehr Material und somit mehr Fläche zum Verbinden zur Verfügung steht.

Vorteilhaft ist die hohe Stabilität und die geringere Schwingneigung des sich ergebenden Streustrahlengitters. Auch die Flexibilität bei der Anpassung des Streustrahlengitters an die Auflösung des Röntgendetektors erweist sich gegenüber anderen Streustrahlenabsorbern als großer Vorteil. Röntgendetektoren für CT-Systeme weisen eine Krümmung auf. Ein erfindungsgemäßes Streustrahlengitter läßt sich aufgrund seiner Flexibilität gut an diese Krümmung anpassen.

Die Herstellung eines erfindungsgemäßen Streustrahlengitters erweist sich als einfach und kostengünstig. Röntgenstrahlen absorbierender Draht ist leicht verfügbar und auch einfach zu bearbeiten. Das Anordnen der Drahtelemente zu einem erfindungsgemäßen Streustrahlengitter kann mit großer Präzision erfolgen.

Die Aufgabe wird auch mit einem Röntgenuntersuchungsgerät mit einem Streustrahlengitter gemäß Anspruch 1 gelöst.

Ausführungsbeispiele der Erfindung werden im folgenden anhand der Zeichnung näher erläutert. Es zeigen:
- Fig. 1: Computertomograph mit über dem Detektor angeordneten Gitter
- Fig. 2: Ansicht zweier Schichten von Drahtelementen von oben
- Fig. 3: Seitenansicht eines Streustrahlengitters
- Fig. 4: Seitenansicht eines Streustrahlengitters mit gleichartig ausgerichteten Schichten
- Fig.5: fokussiertes Streustrahlengitter in Seitenansicht

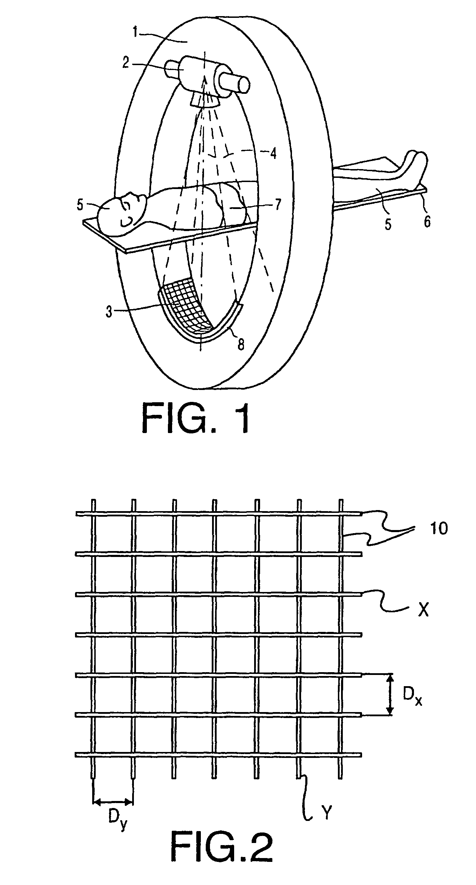

Figur 1 zeigt einen Computertomographen mit einer Gantry 1 an der eine Strahlungsquelle 2 angeordnet ist. Der Röntgendetektor 8 mit dem darüber angeordneten Streustrahlengitter 3 ist der Strahlungsquelle 2 gegenüber angeordnet. In den Strahlengang 4 wird ein Patient 5 auf einer Pritsche 6 liegend eingebracht. Die Gantry 1 dreht sich um den Patienten 5. Dabei wird ein Untersuchungsbereich 7 von allen Seiten durchleuchtet. Der Patient 5 wird in horizontaler Richtung oder in Richtung seiner Längsachse durch die sich drehende Gantry 1 geschoben, so dass mittels mehrerer Querschnittsbilder ein Volumenbild aufgenommen wird. Bei zweidimensionalen Röntgendetektoren 8 ist der Bereich, der mit einer Drehung gescannt wird, wesentlich größer als bei einzeiligen Röntgendetektoren. Dadurch kann der Patient 5 schneller durch die Gantry 1 geschoben werden.

Figur 2 zeigt zwei Schichten von parallel angeordneten Drahtelementen 10 von oben. Die Drahtelemente 10 der einen Schicht sind in X-Richtung ausgerichtet und die Drahtelemente der anderen Schicht sind in Y-Richtung bezüglich eines Raumkoordinatensysrems ausgerichtet. Der Abstand D_{X}bezeicbnet den Abstand zwischen den Drahtelementen der Schicht, in der die Drahtelemente in X-Richtung ausgerichtet sind. Der Abstand D_{Y}bezeichnet den Abstand zwischen den Drahtelementen der Schicht, in der die Drahtelemente in Y-Richtung ausgerichtet sind. In dieser Ausführungsform sind die Abstände D_{X}und D_{y} gleich groß. Durch die Abstände D_{X}und D_{y} der Drahtelemente 10 werden Gitteröffnungen gebildet. Durch diese Gitteröffnungen treten die Röntgenstrahlen in das Streustrahlengitter ein. Querstrahlende Röntgenphotonen werden an den Drahtelementen der einzelnen Schichten absorbiert, so dass nur die Röntgenphotonen zum Röntgendetektor gelangen, die charakteristisch für das darzustellende Röntgenbild sind.

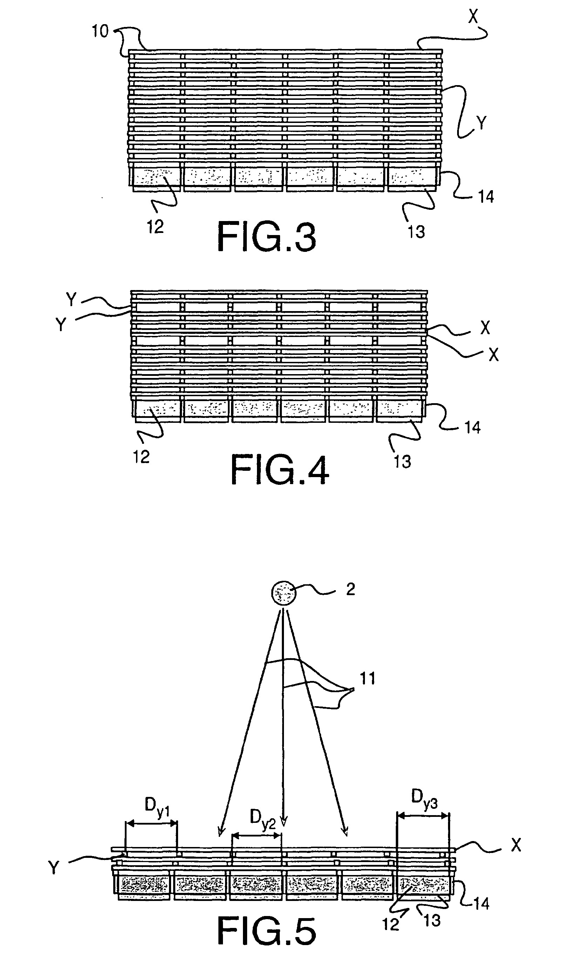

Figur 3 zeigt mehrere Schichten von Drahtelementen die wechselweise in X- und Y Richtung ausgerichtet sind in der Seitenansicht. Durch das Anordnen mehrerer Schichten übereinander entsteht ein webartiges Gitter. Dieses Gitter ist über dem aus Szintillatorelementen 12, Trennelementen 14 und den Photosensoren 13 bestehenden Röntgendetektor angeordnet. Dieses Streustrahlengitter in Fig. 3 dargestellte Gitter ist nicht fokussiert.

Figur 4 zeigt ein Streustrahlengitter bei dem mehrere aufeinander folgende Schichten in eine Richtung X oder Y ausgerichtet sind. Für spezielle Röntgendetektoren kann eine derartige Anordnung bezüglich der Stabilität von Vorteil sein. Außerdem wird für alle Einfallswinkel der Streustrahlung eine Absorption sichergestellt. Bei gleichmäßiger Anordnung, wie in Fig. 2, gibt es genau einen Einfallswinkel für die Streustrahlung, bei dem keine Absorption erfolgt.

Figur 5 zeigt ein fokussiertes Streustrahlengitter bei dem Abstände zwischen den Drahtelementen 10 unterschiedlich sind. Röntgenstrahlen werden von der Strahlungsquelle 2 mit einem Fokus ausgesendet und verlaufen strahlenförmig mit einem Strahlungswinkel von diesem Fokus weg. Um eine effektive Filterung oder eine bestmögliche Primärstrahlentransparenz zu erreichen, wird das Streustrahlengitter fokussiert. Der Abstand D_{Y1} zwischen den Drahtelementen der oberen, in Y-Richtung ausgerichteten Schicht ist am kleinsten. In der nächsten, darunter angeordneten Schicht weisen die Drahtelemente einen etwas größeren Abstand D_{Y2} auf. Der Abstand D_{Y3} zwischen den Drahtelementen in der untersten Schicht ist am größten. Die Strahlungsquelle 2 sendet die Röntgenstrahlen 11 aus, die auf das Streustrahlengitter treffen. Hier werden die Streustrahlenanteile absorbiert. Die Röntgenstrahlenanteile, die unverfälschte Information in sich tragen, können ungehindert das entsprechende Detektorelement erreichen. Das jeweilige Detektorelement wird dabei aus dem Szintillatorelement 12 mit dem darunter angeordneten Photosensor 13 gebildet.

Eine Fokussierung des Gitters in nur eine Ausrichtung ist bei speziellen Röntgendetektortypen ohne Schwierigkeiten realisierbar. Hierbei wird dann der Abstand der Drahtelemente in den aufeinander folgenden Schichten nur in einer Richtung von oben nach unten vergrößert. Dies bedeutet, dass beispielsweise die Schicht, die Drahtelemente mit X-Ausrichtung aufweist, eine konstanten Abstand zwischen den Drahtelementen in allen Schichten mit X-Ausrichtung aufweist.

Ein bevorzugtes Querschnittsmaß der Drahtelemente ist 100µm. Die Abstände der einzelnen Drahtelemente zueinander betragen etwa 1,5 mm, so dass sich bei einem unfokussierten Gitter eine Gitteröffnung von 1,5 mm x 1,5 mm ergibt.

Nicht explizit dargestellt ist ein Streustrahlengitter für einen gekrümmten Röntgendetektor.

Die Herstellung eines solchen Gitters ist mit vielen Verfahren realisierbar. Die Drahtelemente können miteinander verklebt, verschweißt oder verlötet werden. Die Drahtelemente können in einen für Röntgenstrahlen durchlässigen Kunststoff eingelassen werden. Eine Produktion von Schichten, bei denen die parallelen Drahtelemente in Kunststoff eingelassen sind, ist ebenfalls realisierbar. Dadurch kann man beliebig viele Schichten einfach herstellen und ist beim Zusammenfügen der Schichten für ein Streustrahlengitter in der Anzahl flexibel.

Die Drahtelemente weisen eine gewisse Flexibilität auf, so dass ein Verweben der Drahtelemente ebenfalls möglich ist. Dabei werden die sich kreuzenden Drahtelemente an den Kreuzungspunkten umeinander gebogen.

Streustrahlengitter können auch mit Gitteröffnungen realisiert werden, die nicht rechteckig sind. Für Röntgendetektoren die n-eckige Detektorelemente aufweisen, kann durch unterschiedliche Ausrichtung der Drahtelemente einzelner Schichten die jeweilige eckige Form des Detektorelements nachgebildet werden.

Streustrahlengitter können für gewisse Anwendungsbereiche auch für elektromagnetische Strahlung mit einer anderen Wellenlänge als die der Röntgenstrahlung realisiert werden. Soll ein erfindungsgemäßes Streustrahlengitter neben der Röntgenstrahlen auch Licht absorbieren, müssen die Drahtelemente beispielsweise schwarz sein, um neben der Absorption der Röntgenstrahlung auch entsprechende Lichtstrahlung zu absorbieren.

Streustrahlengitter mit einer feinmaschigeren Auflösung für großflächige ebene Röntgendetektoren sind auch realisierbar. Dabei weist der Draht einen Querschnitt kleiner 1 mm und einen Abstand zwischen den Drahtelementen von ebenfalls kleiner 1 mm auf.

## Patentansprüche

1. Streustrahlengitter (3) zur Absorption von Röntgenstrahlen, in dem mehrere Schichten vorgesehen sind, wobei jede der Schichten mehrere parallel zueinander angeordnete Drahtelemente (10) enthält und **dadurch gekennzeichnet, daß** das Streustrablengitter (3) auf einen Fokus fokussiert und dadurch gebildet ist, dass die Drahtelemente (10) aufeinanderfolgender Schichten gegeneinander um einen rechten Winkel gedreht sind.

2. Streustrahlengitter nach Anspruch 1,
**dadurch gekennzeichnet,**
**dass** die Drahtelemente (10) runde oder mehreckige Querschnitte aufweisen.

3. Streustrahlengitter nach Anspruch 1,
**dadurch gekennzeichnet,**
**dass** die Abstände (DX,DY) zwischen benachbarten Drahtelementen (10) einer Schicht oder benachbarten Drahtelementen (10) verschiedenen Schichten unterschiedlich sind.

4. Streustrahlengitter nach Anspruch 1,
**dadurch gekennzeichnet,**
**dass** alle Drahtelemente (10) mehrerer aufeinanderfolgender Schichten in eine Richtung (x oder y) ausgerichtet sind.

5. Streustrahlengitter nach Anspruch 1,
**dadurch gekennzeichnet,**
**dass** die Drahtelemente (10) aus Metall bestehen oder mit einem Metall beschichtet sind.

6. Streustrahlengitter nach Anspruch 1,
**dadurch gekennzeichnet,**
**dass** die Schichten zur Fixierung der Drahtelemente Kunststoff aufweisen.

7. Röntgenuntersuchungsgerät, aufweisend ein Streustrahlengitter (3) nach einem der Ansprüche 1 bis 6 und einen Röntgendetektor (8), wobei das Streustrahlengitter (3) vor dem Röntgendetektor (8) angeordnet ist.

## Claims

1. A grid (3) for the absorption of X-rays, comprising a plurality of layers which each contain a plurality of parallel-arranged wire elements (10), **characterized in that** the grid (3) is focused onto a focus and is formed by arranging the wire elements (10) of successive layers so as to extend at right angles to one another.

2. A grid as claimed in claim 1, **characterized in that** the wire elements (10) have round or polygonal cross-sections.

3. A grid as claimed in claim 1, **characterized in that** the distances (D_{X}, D_{Y}) between neighboring wire elements (10) of a layer or between neighboring wire elements (10) of different layers are different.

4. A grid as claimed in claim 1, **characterized in that** all the wire elements (10) of a plurality of successive layers are oriented in one direction (x or y).

5. A grid as claimed in claim 1, **characterized in that** the wire elements (10) consist of metal or are coated with a metal.

6. A grid as claimed in claim 1, **characterized in that** the layers comprise synthetic resin in order to secure the wire elements.

7. An X-ray examination apparatus which includes a grid (3) as claimed in any one of the claims 1 to 6, and an X-ray detector (8), which grid (3) is arranged in front of the X-ray detector (8).

## Revendications

1. Grille anti-diffusante (3) pour absorber des rayons X, dans laquelle plusieurs couches sont prévues, dans laquelle chacune des couches comprend plusieurs éléments de fil métallique (10) disposés en parallèle les uns aux autres, et **caractérisée en ce que** la grille anti-diffusante (3) focalise un foyer et est formée **en ce que** les éléments de fil métallique (10) de couches successives sont tournés les uns par rapport aux autres d'un angle droit.

2. Grille anti-diffusante selon la revendication 1, **caractérisée en ce que** les éléments de fil métallique (10) présentent des sections transversales rondes ou polygonales.

3. Grille anti-diffusante selon la revendication 1, **caractérisée en ce que** les distances (DX, DY) entre des éléments de fil métallique (10) voisins d'une couche ou des éléments de fil métallique (10) voisins de différentes couches sont différentes.

4. Grille anti-diffusante selon la revendication 1, **caractérisée en ce que** tous les éléments de fil métallique (10) de plusieurs couches successives sont orientés dans une direction (x ou y).

5. Grille anti-diffusante selon la revendication 1, **caractérisée en ce que** les éléments de fil métallique (10) se composent de métal ou sont recouverts de métal.

6. Grille anti-diffusante selon la revendication 1, **caractérisée en ce que** les couches présentent de la matière plastique pour la fixation des éléments de fil métallique.

7. Appareil d'examen radiologique, présentant une grille anti-diffusante (3) selon l'une quelconque des revendications 1 à 6 et un détecteur de rayons X (8), dans lequel la grille anti-diffusante (3) est disposée devant le détecteur de rayons X (8).
